# EUROPEAN PATENT SPECIFICATION

(11) **EP 4 040 118 B1**
(45) Date of publication and mention of the grant of the patent: **30.07.2025**
(21) Application number: 22155108.8
(22) Date of filing: 04.02.2022
(51) Int. Cl.: G01F 23/74, G01F 23/76, B65B 57/14, B65B 57/16, B65B 9/20, B65B 9/12

(54) **LEVEL READER SYSTEM AND PACKAGE PRODUCING MACHINE COMPRISING THE LEVEL READER SYSTEM**
FÜLLSTANDSLESESYSTEM UND VERPACKUNGSHERSTELLUNGSMASCHINE MIT DEM FÜLLSTANDSLESESYSTEM
SYSTÈME DE LECTURE DE NIVEAU ET MACHINE D'EMBALLAGE DE COLIS COMPRENANT LE SYSTÈME DE LECTURE DE NIVEAU

(30) Priority: 08.02.2021 EP 21155744
(43) Date of publication of application: 10.08.2022
(73) Proprietor: Tetra Laval Holdings & Finance S.A., 1009 Pully (CH)
(72) Inventor: GARUTI, Nicola, 42019 Scandiano (IT); BARTOLINI, Robert, 41054 Marano sul Panaro (IT)
(74) Representative: Tetra Pak Patent Attorneys

(56) References cited:
- US-A1- 2011 185 686
- US-A1- 2015 355 014
- US-A1- 2017 160 123
- US-B2- 9 335 201

## Description

### Technology field

The present invention relates to a level reader device for a package producing machine. The present invention also relates to a level reader system and a package producing machine comprising such level reader system.

### Background

When a packaging container for liquid food such as milk, mineral water, tea, juice, soup, drinks, or the like is produced, a web shaped laminated packaging material may be used. Packaging containers are produced by initial longitudinal sealing of the web shaped laminated packaging material using heat sealing, ultrasonic sealing or the like. For this purpose, a sealing strip may be applied to an edge of the web shaped laminated packaging material. The laminated packaging material can then be formed in the shape of a tube, whereby opposite edges of the laminated packaging material are brought in contact and sealed in the longitudinal direction (lengthwise) in order to close the tube longitudinally.

A filling pipe is typically arranged inside the tube of packaging material through which the desired liquid content is discharged. During continuous production, a partly filled tube is maintained by having a relatively constant level of liquid content in the tube. The partly filled tube is transversely sealed at regular intervals, whereby a series of pillow-shaped preform containers are formed. A preform container is formed into a predetermined shape and separated from the upstream tube, whereby production of a container of packaging material is completed.

Accurate control of the amount of liquid content in the tube is important, particularly with regards to sealing and forming operations to provide the container of packaging material. If the tube is filled with too much liquid content, there will be an increased resistance against the clamping action of the transversal sealing jaws. The increased resistance may also cause damage to the container of packaging material during the final shaping and forming of the container. Examples of damage that may appear due to the increased resistance are e.g. cracks, breaks and the like in the sealed portions of the packaging material. Moreover, if the amount of liquid in the tube exceeds a certain level, there is an imminent risk of overfilling the tube. Overfilling of

the tube may cause leakage that leads to production stops or damaging of associated components. As production stops are costly, reducing the risk for damaging of the packaging material during filling and forming of the packaging containers is of significant importance. Even if not causing leakage, overfilling also creates undesired waste of the food product that is filled. It is thus desired to monitor liquid levels in package producing machines.

A package producing machine having a liquid level detector is disclosed in patent document US2011/185686A1.

In light of the observations above, there is thus a need for improved control of the level of liquid content in the tube of packaging material. Hence, the present inventors have identified both the need for and the benefits of a robust and accurate measuring of the level of liquid content.

### Summary

It is accordingly an object of the invention to solve, eliminate, alleviate, mitigate or reduce at least some of the problems and shortcomings referred to above.

In this disclosure, a solution to the problem outlined above is proposed. In the proposed solution, a level reader device, a level reader system, and a package producing machine is described.

In a first aspect, a level reader system for determining a level of liquid in a tube of packaging material, wherein the level reader system comprises a magnetic float and a level reader device for a package producing machine, is provided.

The level reader device comprises a housing extending in a longitudinal direction being substantially parallel to a filling direction of a tube of packaging material, a plurality of sensors being distributed in the housing along the longitudinal direction and configured to provide one or more sensor readings, and a processing unit being configured to determine a level of liquid in the tube of packaging material based on the one or more sensor readings. The magnetic float comprises a cylinder and a ring-shaped holder arranged in the cylinder, and wherein the ring-shaped holder comprises a plurality of magnets being distributed around said holder.

Benefits of the present invention come from the level reader device being capable of providing extremely accurate liquid level signals due to a very high density of sensors. Moreover, as the total length of the level reader device is substantially larger compared to what is known in the art, maintenance of liquid level control can be performed over a larger space. Hence, the package producing machine becomes more robust and versatile for different package sizes, and the risk of having overfilling of liquid in the machine (and thus stopping of machine production) is vastly minimized. The topology of the plurality of sensors furthermore simplifies the installation of the level reader device, as well as associated components in the package producing machine. Additionally, thanks to improved sensitivity of the plurality of sensors in the level reader device, compatibility is enabled for a variety of associated magnetic devices that are not capable of generating strong magnetic fields. This also results in minimizing the risk of false readings.

According to one embodiment, the plurality of sensors is configured to provide the one or more sensor readings at the same time which are indicative of defined values separated from zero, wherein one sensor reading among the one or more sensor readings is indicative of a value higher than the other sensor readings.

According to one embodiment, the processing unit is configured to determine the level of liquid in the tube of packaging material from said one sensor reading which is indicative of a value higher than the other sensor readings.

According to one embodiment, the sensors of the plurality of sensors are capable of operating individually and different sensors of the plurality of sensors are configured to provide at the same time said plurality of sensors readings.

According to one embodiment, one sensor reading among the one or more sensor readings is indicative of a value lower than the other sensor readings, and the processing unit is configured to determine the level of liquid in the tube of packaging material from an average value of said sensor reading which is indicative of a value higher than the other sensor readings and said sensor reading which is indicative of a value lower than the other sensor readings.

According to one embodiment, the processing unit is configured to determine the level of liquid in the tube of packaging material from a moving average of a predetermined number of previously provided sensor readings.

According to one embodiment, the processing unit is configured to determine the level of liquid in the tube of packaging material by selecting one of: said one sensor reading which is indicative of a higher value than the other sensor readings, said average value, or said moving average.

According to one embodiment, the plurality of sensors is in the range of 15 to 45 sensors, preferably in the range of 20 to 40 sensors, and most preferably in the range of 25 to 35 sensors.

According to one embodiment, the plurality of sensors are distributed along a length of 10 to 35 cm, preferably along a length of 15 to 30 cm, and most preferably along a length of 20 to 25 cm.

According to one embodiment, each of the plurality of sensors is a magnetoresistive sensor.

According to one embodiment, the magnetoresistive sensitivity of each sensor is in the range of 5 to 15 G, preferably in the range of 7 G to 11 G.

According to one embodiment, the magnetoresistive sensitivity of each sensor is in the range of 10 to 25 G, preferably in the range of 14 G to 20 G.

According to one embodiment, the longitudinal extension of the housing is substantially larger than a vertical extension of the ring-shaped holder.

In a second aspect, a package producing machine is provided. The package producing machine comprises the level reader system according to the first aspect and any of the embodiments associated therewith.

It should be emphasized that the term "comprises/comprising" when used in this specification is taken to specify the presence of stated features, integers, steps, or components, but does not preclude the presence or addition of one or more other features, integers, steps, components, or groups thereof. All terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### Brief description of the drawings

The foregoing will be apparent from the following more particular description of the example embodiments, as illustrated in the accompanying drawings in which like reference characters refer to the same parts throughout the different views. The drawings are not necessarily to scale; emphasis is instead placed upon illustrating the example embodiments.
Figure 1 is a schematic illustration of an embodiment of a package producing machine.
Figure 2a is a schematic block diagram of an embodiment of a level reader system.
Figure 2b is a schematic illustration of a level reader system according to one embodiment.
Figure 3a is a schematic block diagram of an embodiment of a level reader system.
Figure 3b is a schematic illustration of a level reader system according to one embodiment.
Figures 4a is an isometric view of a level reader system according to an embodiment.
Figure 4b-c are cross-sectional views of embodiments of a level reader device.

### Detailed description of the embodiments

Embodiments of the invention will now be described with reference to the accompanying drawings. The invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like numbers refer to like elements.

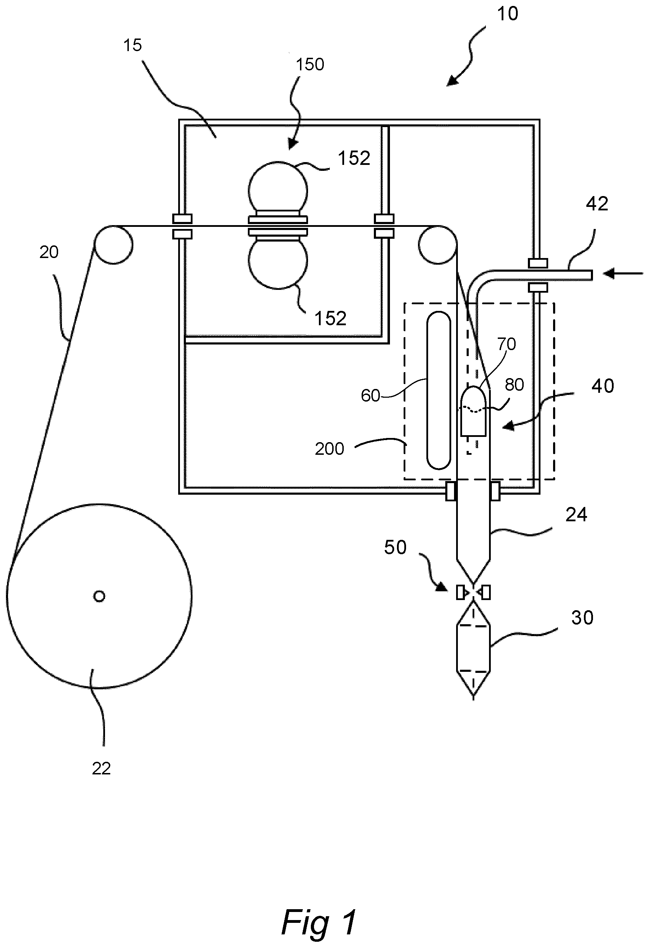

With reference to Figure 1, a package producing machine 10 according to one embodiment is illustrated. The illustrated package producing machine 10 can be used in the food packaging industry for creating package containers 30 filled with liquid food, such as milk, mineral water, tea, juice, soup, drinks, or the like. Production of a packaging container 30 involves multiple steps, processes or techniques, some of which are shown in Figure 1. The illustrative image is not to be interpreted as limiting to the scope of this disclosure, as it merely shows one possible embodiment of the package producing machine 10 as disclosed herein. The package producing machine 10 may comprise any number of additional or fewer steps, processes or techniques, provided that the inventive aspects of the present disclosure are enabled.

In Figure 1, a web of packaging material 20 is, for instance, provided on a reel 22, and fed continuously through the package producing machine 10 where it passes several different stations in motion. Figure 1 specifically depicts an aseptic chamber 15, a filling station 40, and a sealing and forming station 50, although other relevant stations can also be realized.

The web of packaging material 20 enters the aseptic chamber 15 and passes a sterilization unit 150 in the form of one or more electron beam emitters 152. After being exposed to electron beam irradiation, the web of packaging material 20 exits the aseptic chamber 15. It should be noted that the sterilization unit 150 may not necessarily be based on electron beam irradiation, as other sterilization techniques such as H₂O₂ may be used as well.

In the filling station 40, the web of packaging material 20 is formed into a tube of packaging material 24, hereinafter simply being referred to as a "tube". The tube 24 is filled with the desired liquid content, preferably a liquid food product, through a filling pipe 42. The filling station 40 comprises a level reader system 200 that is configured to monitor the amount of liquid content in the tube 24, which will be described in more detail with reference to the remaining figures of this disclosure.

Downstream the filling station 40 the sealing and forming section 50 is provided. The sealing and forming section 50 is configured to provide transversal seals to the tube 24, cut the leading part of the tube 24 from the upstream tube 24 at the position of the transversal seal, and form the separated package container 30 to its desired shape. A plurality of sealing jaws (not shown) may be provided, which are configured to provide transversal seals to the tube 24 by engagement with the tube 24. These transversal seals may be formed by e.g. inductive heating which means that the sealing jaws may have to engage the tube 24 for a period of time in order to form a high quality transversal seal. The tube 24 is then cut into packaging containers 30 along the transversal seals by a cutting means.

The processes performed at the sealing and forming section 50 typically affect a level 80 of liquid in the tube 24. For instance, whenever the tube 24 is provided with its transversal seals, the contact caused by applying the sealing jaws will reduce the total volume of the space within the tube 24. Thus the level 80 of the liquid in the tube 24 will be raised. The volume inside the tube 24 will also be affected by the shape of the tube 24; since the forming section 50 will normally shape the tube 24 from a circular cross-section to a rectangular cross-section, the area enclosed by the tube 24 will decrease. As is understood from above, the repetitive action of the sealing and forming section 50 will cause variations of the level 80 of liquid in the tube 24. Additionally, the energy generated by providing transversal seals to the tube 24 using e.g. inductive heating may affect the kinetic energy and consequently the level 80 of liquid in the tube 24 as well. It is difficult to determine exactly how much the level 80 of the liquid in the packaging material will change, as there are many different additional situations that may occur, including but not limited to external affects, production changes, material choices, to name a few. The skilled person may realize additional such situations.

It is particularly difficult to control the level 80 of liquid in high-performing package producing machines 10 that are capable of producing a significant number of packaging containers 30 every second. If the level 80 of liquid in the tube 24 is not controlled accurately, problems such as the ones presented in the background section may be introduced. It is hence of paramount importance that the level reader system 200 is able to provide extremely accurate readings of the level 80 of liquid in the tube 24.

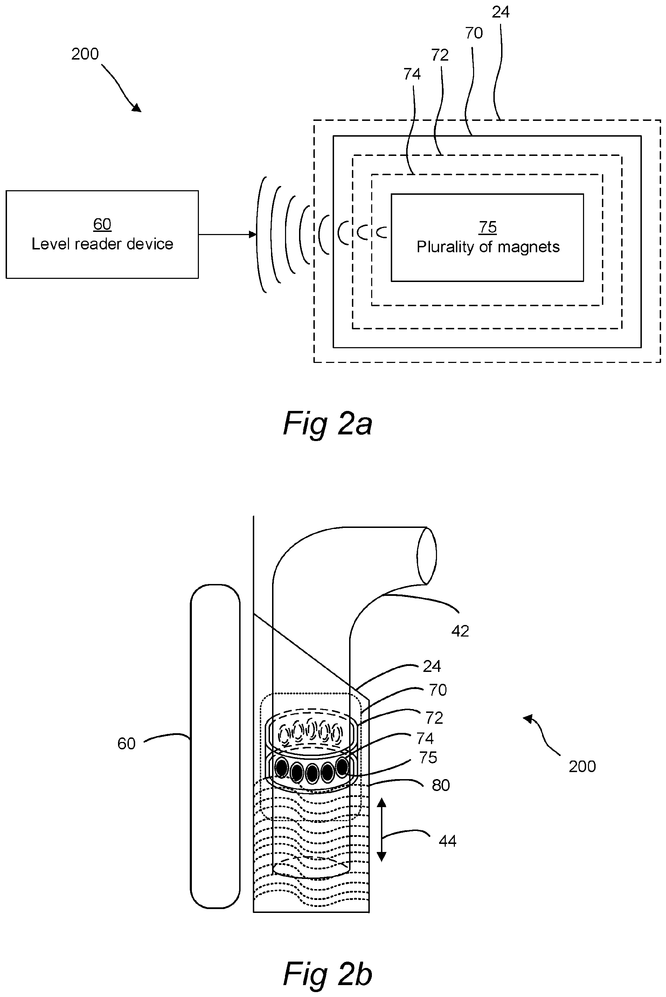

Turning now to Figures 2a-b, an embodiment of the level reader system 200 is shown.

According to the invention, the level reader system 200 comprises a level reader device 60 and a magnetic float 70 (see also Fig. 1). In Figure 2a, the squares having dashed lines are indicative of features having more of an optional character, but are nonetheless comprised in a preferred embodiment of the invention. The skilled person may realize additional embodiments for these features in order to enable accurate monitoring of the level 80 of liquid in the tube 24.

The magnetic float 70 may be arranged inside or within the tube 24 so that at least one part of the magnetic float 70 is capable of floating on the surface of the liquid within the tube 24. This is visualized in Figure 2b. The at least one part of the magnetic float 70 is capable of floating both in high and low density liquids. The magnetic float 70 may comprise one or more buoyant materials. In different embodiments of the invention, the magnetic float 70 may comprise different buoyant materials, and it can be replaced if desired. Desired characteristics of the buoyant materials may include excellent buoyancy, high strength-to-weight ratio, large operational temperature spans, high pressure resistance, etc.

The magnetic float 70 is not restricted to having a particular shape, form or dimension, provided that it can fit within the tube 24 and perform its intended function, which now will be described.

As is seen in Figures 2a-b, the magnetic float 70 comprises a cylinder 72 and a ring-shaped holder 74 arranged in the cylinder 72. The cylinder 72 is preferably arranged around an outer circumference of the filling pipe 42, although alternative arrangements may be realized. The filling pipe 42 is fixedly arranged within the tube 24, and provided so that a filling direction 44 is enabled in a substantially vertical direction along a vertical axis in relation to the ground. Hence, the cylinder 72 is configured to be movable in the filling direction 44, along the filling pipe 42. The magnetic float 70 floats on the liquid within the tube 24, and movement of the cylinder 72 is thereby enabled by a raising movement or a sinking movement of the magnetic float 70 as caused by the level 80 of the liquid in the tube 24. The magnetic float 70 may be arranged so that it can freely rotate around filling pipe 42. This is particularly beneficial, since it minimizes or even eliminates the risk of the level reader device 60 not being able to pick up magnetic signals or magnetic fields as generated by the magnetic float 70.

As indicated in Figures 2a-b, the cylinder 72 comprises a ring-shaped holder 74. According to the invention, the ring-shaped holder 74 is arranged in the cylinder 72. The ring-shaped holder 74 comprises a plurality of magnets 75 being distributed, arranged or held around the holder 74. Figure 2b illustrates in more detail how the plurality of magnets 75 may be distributed around the ring-shaped holder 74. In this example, a total of 10 magnets are arranged around the holder 74. The number of magnets within the magnetic float 70 may vary, depending on e.g. dimensions, materials, or other characteristics of the magnetic float 70, filling pipe 42 and/or magnetic reader 60.

In alternative embodiments not encompassed by the wording of the claims, the plurality of magnets 75 may be arranged on either one of the magnetic float 70 or the cylinder 72, without requiring the assistance of a ring-shaped holder 74 and/or the cylinder 72.

As the magnetic float 70 moves along the filling direction 44 and possibly rotates around the filling pipe 42, the plurality of magnets 75 are configured to continuously generate magnetic signals or magnetic fields. The level reader device 60 is configured to read these signals in order to determine the current level 80 of liquid in the tube 24.

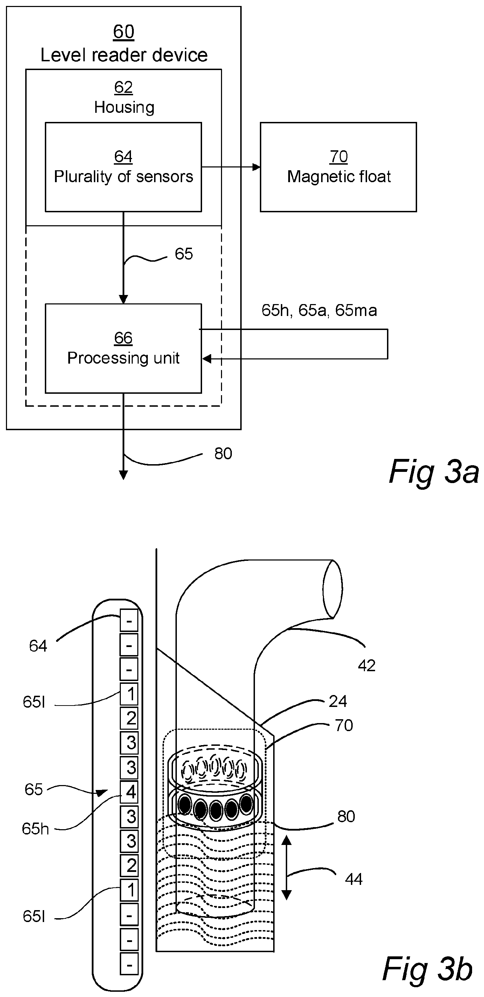

Now turning to Figures 3a-b illustrating a level reader system 200 according to one embodiment. With reference to these figures, the level reader device 60 will be described more thoroughly. The level reader device 60 comprises a housing 62, a plurality of sensors 64, and a processing unit 66.

In different embodiments of the level reader device 60, the housing 62 is shaped, sized, formed and/or dimensioned in any suitable manner. Suitable in this regard means that the housing 62 is adapted to be arranged in the package producing machine 10 and house the components of the level reader device 60. The housing 62 is extending in a longitudinal direction being substantially parallel to the filling direction 44 of the tube 24, which can be seen in Figure 3b. The housing 62 may have an elongated shape that is extending in the longitudinal direction. The housing 62 is preferably arranged in proximity to the tube 24, and thereby the magnetic float 70, such that the magnetic signals or magnetic fields generated from the magnetic float 70 can be read by the level reader device 60 even when the tube 24 is arranged between the level reader device 60 and the magnetic float 70.

The plurality of sensors 64 are distributed in the housing 62, along the longitudinal direction, and configured to provide one or more sensor readings 65. Preferably, the plurality of sensors 62 are distributed along the extending edge of the housing 62 that is facing towards the magnetic float 70, such that the one or more sensor readings 65 can be provided more accurately. Alternatively, the plurality of sensors 64 may be distributed anywhere within the housing 62, given that the sensor readings 65 can be provided accurately.

The plurality of sensors 64 may be an arbitrary number of sensors that can fit within the housing 62. In one embodiment, the plurality of sensors 64 is in the range of 15 to 45 sensors. In a more preferred embodiment, the plurality of sensors 64 is in the range of 20 to 40 sensors. In a most preferable embodiment, the plurality of sensors 64 is in the range of 25 to 35 sensors. The plurality of sensors is distributed along a specific length that generally corresponds to a length of the longitudinally extending side of housing. In one embodiment, the length is anywhere between 10 to 35 cm. In a more preferred embodiment, the length is between 15 to 30 cm. In a most preferred embodiment, the length is between 20 to 25 cm.

The plurality of sensors 64 may be magnetoresistive sensors commonly known in the art. Magnetoresistive sensors are ultra-sensitive devices that are designed to be durable and reliable speed or position sensors for small magnetic fields in power applications. The supply voltage range for such applications may be in the range of 3 Vdc to 24 Vdc, and typically around 12 Vdc. The temperature range of the magnetoresistive sensors may be in the temperature range -40°C to 85°C. The magnetoresistive sensors do not require identification of the magnet polarity, which simplifies the installation process and potentially reduces the system cost. Benefits provided by the magnetoresistive sensors include, for instance, durability and reliability due to a magnetic solid state, non-contact and no-glass design, and cost-efficiency and flexibility due to ultrahigh sensitivity.

The magnetoresistive sensitivity of the plurality of sensors 64 may be a value typical for such magnetoresistive sensors. In one embodiment, the magnetoresistive sensitivity is in the range of 5 G to 25 G. The magnetoresistive sensors may be based on two different types of sensors. In the first one of these types, the magnetoresistive sensitivity is in the range of 7 G to 11 G, wherein 7 G is the typical operation sensitivity and 11 G is the maximum operation sensitivity. In the second one of these types, the magnetoresistive sensitivity is in the range of 14 G to 20 G, wherein 14 G is the typical operation sensitivity and 11 G is the maximum operation sensitivity. Any one or a combination of these two types may be used for the magnetic float 70. Provided with the magnetoresistive sensors having a higher magnetoresistive sensitivity, according to this description, it is possible to arrange the level reader device 60 further away from the magnetic float 70 than what was previously possible, which may simplify the installation and operation processes.

The processing unit 66 may be arranged as a single unit or as several controllers that are collectively configured to perform the operations of the processing unit 66. The processing unit 66 may be implemented in any known controller technology, including but not limited to microcontroller, processor (e.g. PLC, CPU, DSP), FPGA, ASIC or any other suitable digital and/or analog circuitry capable of performing the intended functionality. The processing unit 66 may comprise a memory. The memory of the processing unit 66 may be implemented in any known memory technology, including but not limited to ROM, RAM, SRAM, DRAM, CMOS, FLASH, DDR, SDRAM or some other memory technology. In some embodiments, the memory may be integrated with or be internal to the processing unit 66.

The processing unit 66 is configured to receive, analyze, and make a decision based on the provided one or more signal readings 65 from the plurality of sensors 64. The decision is related to determining the level 80 of liquid in the tube 24.

In one embodiment, the processing unit 66 is arranged within the housing 62. Alternatively, the processing unit 66 is arranged as an external unit that is in wired and/or wireless communication with the level reader device 60. In either one of these two embodiments, the processing unit 66 is arranged so that a decision regarding the level 80 of liquid in the tube 24 can be generated in a very short time. In preferred embodiments, the time required to provide signal readings 65, analyze the signal readings 65, and accurately determine the level 80 of liquid in the tube 24, is less than 1 ms.

If the processing unit 66 is arranged as an external unit being in wireless communication with the level reader device 60, the level reader device 60 may further comprise any communication means known in the art for enabling said communication. Such communication means may be based on short-range communication technologies such as e.g. WiFi or Bluetooth.

Regardless of where the processing unit 66 is arranged, the decision may be used to control the operation of the package producing machine 10 in general, and the operation of the filling pipe 42 in particular. For instance, the decision may be used to control the discharge flow of liquids as outputted from the filling pipe 42, the operation speed of the package producing machine 10, or any similar control operations realized by the person skilled in the arts. Such operations are preferably automatically controlled.

In Figure 3b, one embodiment of a level reader device 60 is shown. This particular level reader device 60 comprises 15 sensors, wherein each one is individually configured to provide a sensor reading 65. As the plurality of sensors 64 are capable of operating individually, the one or more sensor readings 65 may be provided at the same time from different sensors 64. The sensor readings 65 are indicative of defined values that are separated from zero. "Defined" is in this sense referring to a correctly read signal that is indicative of a value, i.e. not being an erroneous reading. Hence, the sensor readings 65 are indicative of a magnetic object, such as the magnetic float 70, being sufficiently close to the plurality of sensors 64 in order to identify magnetic signals. Since the one or more sensor readings 65 can be provided at the same time, and since each individual sensor of the plurality of sensors 64 are arranged at different locations along a side of the housing 62 and are providing readings 65 of the same magnetic object, the values will typically differ from one another depending e.g. on the actual distance between the specific sensor 64 and the magnetic float 70.

In the particular example illustrated in Figure 3b, a total of 9 sensor readings 65 have been read at the same time, each one being indicative of a defined value that is separated from zero. For the sake of simplicity, the values are in the figure denoted as positive integer values ranging from '1' to '4'. For an actual level reader device 60, however, may these values assume any appropriate value. As can be seen, the sensors 64 that are closer to the magnetic float 70 are providing sensor readings 65 that are indicative values that are higher than the sensors 64 that are farther away from the magnetic float 70.

As can be seen in Figure 3b, one sensor reading 65h among the one or more sensor readings 65 is indicative of a value that is higher than the other identified readings. In the exemplifying picture, this value is a '4'. In the case where one sensor reading is indicative of a value that is exactly the same as the value of another sensor reading, either one or both of these two values may be identified as the one sensor reading 65h being indicative of a value that is higher than the values of the other readings. The processing unit 66 may thus be configured to determine the level 80 of liquid in the tube 24 from the one sensor reading 65h being indicative of the value that is higher than the values of the other sensor readings.

In an alternative embodiment, one sensor reading 65l among the one or more sensor readings 65 is indicative of a value lower than the other sensor readings. In Figure 3b, this value is a '1', which can be seen at a defined reading 65 as provided from two separate sensors 64 that are farthest away from the magnetic float 70. The processing unit 66 may be configured to determine the level 80 of liquid in the tube 24 from an average value 65a of said sensor reading 65h being indicative of a value higher than the other sensor readings, and the sensor reading 65l being indicative of a value lower than the other sensor readings.

In yet an alternative embodiment, the processing unit 66 is configured to determine the level 80 of liquid in the tube 24 from a moving average 65ma of a predetermined number of previously provided sensor readings 65. In one embodiment, the predetermined number is a total number for all of the sensors 64 together. In another embodiment, the predetermined number is a number for an individual sensor 64. Typically, the number of previously provided sensor readings may be 8 readings, but the number can also be fewer or more, or be varying during operation. Determining the level 80 of liquid in the tube 24 from a moving average 65ma may be particularly useful in case of a sudden drop or rise of the level 80 of liquid, or to handle erroneous readings 65 provided by e.g. defective sensors 64.

The processing unit 66 may in one embodiment be configured to determine the level 80 of liquid in the tube 24 by selecting either one of the sensor reading 65h being indicative of a higher value than the other sensor readings, the average value 65a, or the moving average 65ma. This selection may be automatically controlled by the processing unit 66, or manually controlled by an operator or technician. The selection may be based on a variety of different factors, such as e.g. what liquids, components, materials or operational settings are used. The processing unit 66 may be configured to intelligently generate the decision based on the sensor readings 65, by e.g. analyzing previously acquired data for current operational settings. Such intelligent decisions may be generated by a self-learning algorithm that is implementing any known supervised and/or unsupervised learning algorithms, such as e.g. example regression algorithms, decision trees, K-means, K-nearest neighbours, neural networks, support vector machines or principal component analysis.

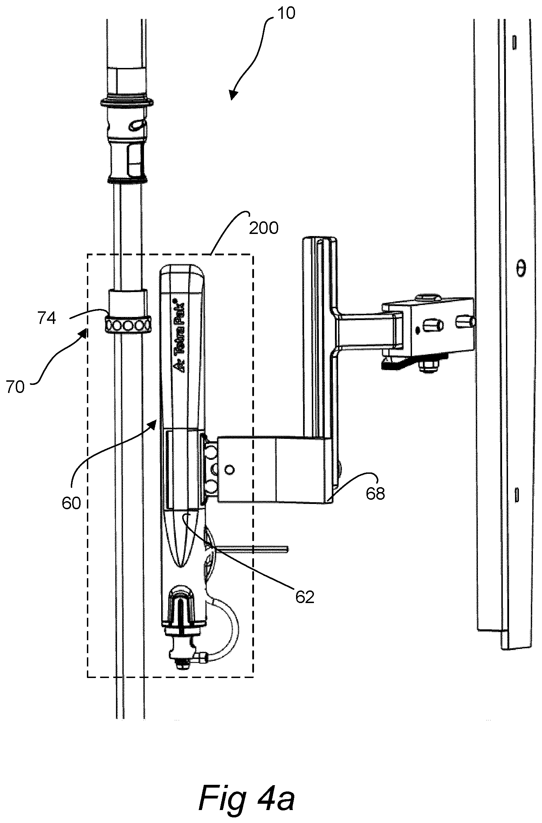

Figures 4a-c illustrate schematic illustrations of the level reader device 60 generally in accordance with the present disclosure.

In Figure 4a, the level reader device 60 can be seen in an arrangement with the magnetic float 70, i.e. a level reader system 200. In a preferred embodiment, which is illustrated in Figure 4a, the longitudinal extension of the level device reader 60 is substantially larger than a vertical extension of the magnetic float 70. Particularly, the longitudinal extension of the housing 62 is substantially larger than the vertical extension of the ring-shaped holder 74. This allows for a very robust filling system, as the ring-shaped holder 74 that is holding the plurality of magnets 75 may travel a distance that is several times longer than its own vertical extension, and still be correctly identified by the level reader device 60. The length ratio between the housing 62 and the vertical extension of the ring-shaped holder 74 may be similar to the length ratio as depicted in Figure 4a. Other length ratios may also be realized.

Figure 4a further depicts fastening means 68 that is adapted to fasten the level reader device 60 to the other components of the package producing machine 10. The fastening means 68 is in this example provided as an arm that is fixedly attached to the package producing machine 10. In other embodiments, the fastening means 68 may be any structure that is suitably mounted to the package producing machine using any one or a combination of screws, bolts and/or adhesive materials. As the level reader device 60 is securely fixed and kept stationary during operation, its position may be calibrated and set e.g. in relation to downstream sealing jaws; by associating the read indicative value 65, as explained above, to the respective sensor 64, it is possible to convert the actual sensor to a height above the sealing jaws. Hence, the monitored level of product in the tube 24 may easily be converted to a tube filling height in centimeters or millimeters.

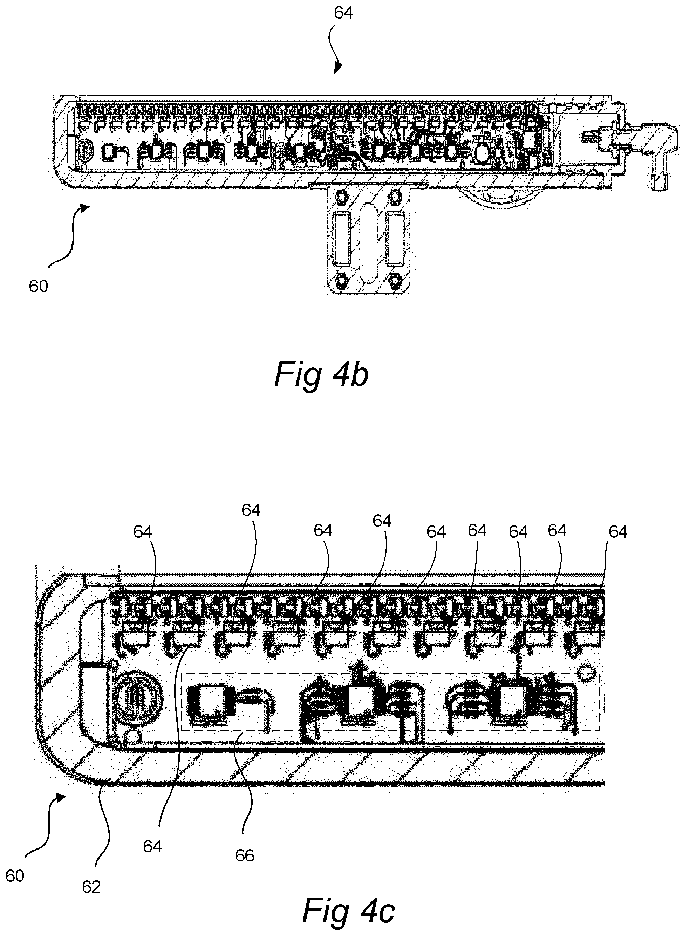

Figure 4b is a schematic illustration of a level reader device 60 according to a preferred embodiment, and Figure 4c is an enlarged section of Figure 4b. The illustrative images generally show how the housing 62, the plurality of sensors 64, and the processing unit 66 may be arranged within the level reader device 60.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. Level reader system (200) for determining a level (80) of liquid in a tube of packaging material (24), wherein the level reader system (200) comprises a magnetic float (70) and a level reader device (60) for a package producing machine,
wherein the level reader device (60) comprises:
a housing (62) extending in a longitudinal direction being substantially parallel to a filling direction (44) of a tube of packaging material (24);
**characterized in that** the level reader device (60) further comprises
a plurality of sensors (64) being distributed in the housing (62) along the longitudinal direction and configured to provide a plurality of sensor readings (65); and
a processing unit (66) being configured to determine a level (80) of liquid in the tube of packaging material (24) based on the plurality of sensor readings (65),
wherein the magnetic float (70) comprises a cylinder (72) and a ring-shaped holder (74) arranged in the cylinder (72), and wherein the ring-shaped holder (74) comprises a plurality of magnets (75) being distributed around said holder (74).

2. Level reader system (200) according to claim 1, wherein the plurality of sensors (64) are configured to provide the plurality of sensor readings (65) which are indicative of defined values separated from zero, wherein one sensor reading (65h) among the one or more sensor readings (65) is indicative of a value higher than the other sensor readings.

3. Level reader system (200) according to claim 1 or 2, wherein the processing unit (66) is configured to determine the level (80) of liquid in the tube of packaging material (24) from said one sensor reading (65h) which is indicative of a value higher than the other sensor readings.

4. Level reader system (200) according any of the preceding claims, wherein the sensors (64) of the plurality of sensors (64) are capable of operating individually and different sensors (64) of the plurality of sensors (64) are configured to provide at the same time said plurality of sensors readings (65).

5. Level reader system (200) according to any one of the claims from 2 to 4, wherein one sensor reading (65l) among the plurality of sensor readings (65) is indicative of a value lower than the other sensor readings, and wherein the processing unit (66) is configured to determine the level (80) of liquid in the tube of packaging material (24) from an average value (65a) of said sensor reading (65h) which is indicative of a value higher than the other sensor readings and said sensor reading (65l) being indicative of a value lower than the other sensor readings.

6. Level reader system (200) according to any one of the claims 2 to 5, wherein the processing unit (66) is configured to determine the level (80) of liquid in the tube of packaging material (24) from a moving average (65ma) of a predetermined number of previously provided sensor readings (65).

7. Level reader system (200) according to claims 3 to 6, wherein the processing unit (66) is configured to determine the level (80) of liquid in the tube of packaging material (24) by selecting one of:
said one sensor reading (65h) which is indicative a higher value than the other sensor readings,
said average value (65a), or
said moving average (65ma).

8. Level reader system (200) according to any of the preceding claims, wherein the plurality of sensors (64) is in the range of 15 to 45 sensors, preferably in the range of 20 to 40 sensors, and most preferably in the range of 25 to 35 sensors.

9. Level reader system (200) according to any of the preceding claims, wherein the plurality of sensors (64) are distributed along a length of 10 to 35 cm, preferably along a length of 15 to 30 cm, and most preferably along a length of 20 to 25 cm.

10. Level reader system (200) according to any of the preceding claims, wherein the plurality of sensors (64) are magneto resistive sensors.

11. Level reader system (200) according to claim 10, wherein the magneto resistive sensitivity of the sensors is in the range of 5 to 15 G, preferably in the range of 7 G to 11 G.

12. Level reader system (200) according to claim 10, wherein the magneto resistive sensitivity of the sensors is in the range of 10 to 25 G, preferably in the range of 14 G to 20 G.

13. The level reader system (200) according to any of the preceding claims, wherein the longitudinal extension of the housing (62) is substantially larger than a vertical extension of the ring-shaped holder (74).

14. Package producing machine (10) comprising the level reader system (200) according to any one of the preceding claims.

## Patentansprüche

1. Füllstandslesesystem (200) zum Ermitteln eines Füllstands (80) einer Flüssigkeit in einem Schlauch eines Verpackungsmaterials (24), wobei das Füllstandslesesystem (200) einen magnetischen Schwimmer (70) und eine Füllstandslesevorrichtung (60) für eine Verpackungsherstellungsmaschine umfasst,
wobei die Füllstandslesevorrichtung (60) umfasst:
ein Gehäuse (62), das sich in einer Längsrichtung erstreckt, die im Wesentlichen parallel zu einer Füllrichtung (44) eines Schlauchs eines Verpackungsmaterials (24) ist;
**dadurch gekennzeichnet, dass** die Füllstandslesevorrichtung (60) ferner umfasst:
eine Vielzahl von Sensoren (64), die in dem Gehäuse (62) entlang der Längsrichtung verteilt sind und konfiguriert sind zum Bereitstellen einer Vielzahl von Sensorablesungen (65); und
eine Verarbeitungseinheit (66), die konfiguriert ist zum Ermitteln eines Füllstands (80) der Flüssigkeit in dem Schlauch des Verpackungsmaterials (24) basierend auf der Vielzahl von Sensorablesungen (65),
wobei der magnetische Schwimmer (70) einen Zylinder (72) und einen ringförmigen Halter (74) umfasst, der in dem Zylinder (72) angeordnet ist, und wobei der ringförmige Halter (74) eine Vielzahl von Magneten (75) umfasst, die um den Halter (74) angeordnet sind.

2. Füllstandslesesystem (200) nach Anspruch 1, wobei die Vielzahl von Sensoren (64) konfiguriert sind zum Bereitstellen der Vielzahl von Sensorablesungen (65), die definierte Werte getrennt von Null anzeigen, wobei eine Sensorablesung (65h) aus der einen oder den mehreren Sensorablesungen (65) einen Wert anzeigt, der höher als die anderen Sensorablesungen ist.

3. Füllstandslesesystem (200) nach Anspruch 1 oder 2, wobei die Verarbeitungseinheit (66) konfiguriert ist zum Ermitteln des Füllstands (80) der Flüssigkeit in dem Schlauch des Verpackungsmaterials (24) aus der einen Sensorablesung (65h), die einen Wert anzeigt, der höher als die anderen Sensorablesungen ist.

4. Füllstandslesesystem (200) nach einem der vorhergehenden Ansprüche, wobei die Sensoren (64) aus der Vielzahl von Sensoren (64) in der Lage sind, einzeln betrieben zu werden und wobei verschiedene Sensoren (64) aus der Vielzahl von Sensoren (64) konfiguriert sind zum gleichzeitigen Bereitstellen der Vielzahl von Sensorablesungen (65).

5. Füllstandslesesystem (200) nach einem der Ansprüche 2 bis 4, wobei eine Sensorablesung (651) aus der Vielzahl von Sensorablesungen (65) einen Wert anzeigt, der niedriger als die anderen Sensorablesungen ist, und wobei die Verarbeitungseinheit (66) konfiguriert ist zum Ermitteln des Füllstands (80) der Flüssigkeit in dem Schlauch des Verpackungsmaterials (24) aus einem durchschnittlichen Wert (65a) der Sensorablesung (65h), die einen Wert anzeigt, der höher als die anderen Sensorablesungen ist, und der Sensorablesung (651), die einen Wert anzeigt, der niedriger als die anderen Sensorablesungen ist.

6. Füllstandslesesystem (200) einem der Ansprüche 2 bis 5, wobei die Verarbeitungseinheit (66) konfiguriert ist zum Ermitteln des Füllstands (80) der Flüssigkeit in dem Schlauch des Verpackungsmaterials (24) aus einem gleitenden Durchschnittswert (65ma) einer vorbestimmten Anzahl von zuvor bereitgestellten Sensorablesungen (65).

7. Füllstandslesesystem (200) einem der Ansprüche 3 bis 6, wobei die Verarbeitungseinheit (66) konfiguriert ist zum Ermitteln des Füllstands (80) der Flüssigkeit in dem Schlauch des Verpackungsmaterials (24) indem einer ausgewählt wird von:
der einen Sensorablesung (65h), die einen Wert anzeigt, der höher als die anderen Sensorablesungen ist,
dem Durchschnittswert (65a) oder
dem gleitenden Durchschnittswert (65ma).

8. Füllstandslesesystem (200) nach einem der vorhergehenden Ansprüche, wobei die Vielzahl von Sensoren (64) in dem Bereich von 15 bis 45 Sensoren, vorzugsweise in dem Bereich von 20 bis 40 Sensoren und am bevorzugtesten in dem Bereich von 25 bis 35 Sensoren liegt.

9. Füllstandslesesystem (200) nach einem der vorhergehenden Ansprüche, wobei die Vielzahl von Sensoren (64) entlang einer Länge von 10 bis 35 cm, vorzugsweise entlang einer Länge von 15 bis 30 cm und am bevorzugtesten entlang einer Länge von 20 bis 25 cm verteilt sind.

10. Füllstandslesesystem (200) nach einem der vorhergehenden Ansprüche, wobei die Vielzahl von Sensoren (64) magnetoresistive Sensoren sind.

11. Füllstandslesesystem (200) nach Anspruch 10, wobei die magnetoresistive Empfindlichkeit der Sensoren in dem Bereich von 5 bis 15 G, vorzugsweise in dem Bereich von 7 G bis 11 G liegt.

12. Füllstandslesesystem (200) nach Anspruch 10, wobei die magnetoresistive Empfindlichkeit der Sensoren in dem Bereich von 10 bis 25 G, vorzugsweise in dem Bereich von 14 G bis 20 G liegt.

13. Füllstandslesesystem (200) nach einem der vorhergehenden Ansprüche, wobei die Längsausdehnung des Gehäuses (62) im Wesentlichen länger als eine vertikale Ausdehnung des ringförmigen Halters (74) ist.

14. Verpackungsherstellungsmaschine (10), die das Füllstandslesesystem (200) nach einem der vorhergehenden Ansprüche umfasst.

## Revendications

1. Système de lecture de niveau (200) pour déterminer un niveau (80) de liquide dans un tube de matériau d'emballage (24), le système de lecture de niveau (200) comprenant un flotteur magnétique (70) et un dispositif de lecture de niveau (60) pour une machine de production d'emballage,
le dispositif de lecture de niveau (60) comprenant :
un logement (62) s'étendant dans une direction longitudinale étant substantiellement parallèle à une direction de remplissage (44) d'un tube de matériau d'emballage (24) ;
**caractérisé en ce que** le dispositif de lecture de niveau (60) comprend en outre
une pluralité de capteurs (64) étant répartis dans le logement (62) le long de la direction longitudinale et configurés pour fournir une pluralité de lectures de capteur (65) ; et
une unité de traitement (66) étant configurée pour déterminer un niveau (80) de liquide dans le tube de matériau d'emballage (24) sur la base de la pluralité de lectures de capteur (65),
le flotteur magnétique (70) comprenant un cylindre (72) et un dispositif de maintien en forme d'anneau (74) agencé dans le cylindre (72), et le dispositif de maintien en forme d'anneau (74) comprenant une pluralité d'aimants (75) répartis autour dudit dispositif de maintien (74).

2. Système de lecture de niveau (200) selon la revendication 1, dans lequel la pluralité de capteurs (64) sont configurés pour fournir la pluralité de lectures de capteur (65) qui sont indicatives de valeurs définies distinctes de zéro, une lecture de capteur (65h) parmi les une ou plusieurs lectures de capteur (65) étant indicative d'une valeur supérieure aux autres lectures de capteur.

3. Système de lecture de niveau (200) selon la revendication 1 ou la revendication 2, dans lequel l'unité de traitement (66) est configurée pour déterminer le niveau (80) de liquide dans le tube de matériau d'emballage (24) à partir de ladite lecture de capteur (65h) qui est indicative d'une valeur supérieure aux autres lectures de capteur.

4. Système de lecture de niveau (200) selon l'une quelconque des revendications précédentes, dans lequel les capteurs (64) de la pluralité de capteurs (64) sont capables de fonctionner individuellement et différents capteurs (64) de la pluralité de capteurs (64) sont configurés pour fournir en même temps ladite pluralité de lectures de capteur (65).

5. Système de lecture de niveau (200) selon l'une quelconque des revendications 2 à 4, dans lequel une lecture de capteur (651) parmi la pluralité de lectures de capteur (65) est indicative d'une valeur inférieure aux autres lectures de capteur, et dans lequel l'unité de traitement (66) est configurée pour déterminer le niveau (80) de liquide dans le tube de matériau d'emballage (24) à partir d'une valeur moyenne (65a) de ladite lecture de capteur (65h) qui est indicative d'une valeur supérieure aux autres lectures de capteur et ladite lecture de capteur (651) étant indicative d'une valeur inférieure aux autres lectures de capteur.

6. Système de lecture de niveau (200) selon l'une quelconque des revendications 2 à 5, dans lequel l'unité de traitement (66) est configurée pour déterminer le niveau (80) de liquide dans le tube de matériau d'emballage (24) à partir d'une moyenne mobile (65ma) d'un nombre prédéterminé de lectures de capteur (65) fournies précédemment.

7. Système de lecture de niveau (200) selon les revendications 3 à 6, dans lequel l'unité de traitement (66) est configurée pour déterminer le niveau (80) de liquide dans le tube de matériau d'emballage (24) en sélectionnant un élément parmi :
ladite lecture de capteur (65h) qui est indicative d'une valeur supérieure à celle des autres lectures de capteur, ladite valeur moyenne (65a), ou
ladite moyenne mobile (65ma).

8. Système de lecture de niveau (200) selon l'une quelconque des revendications précédentes, dans lequel la pluralité de capteurs (64) est dans la plage de 15 à 45 capteurs, préférablement dans la plage de 20 à 40 capteurs, et le plus préférablement dans la plage de 25 à 35 capteurs.

9. Système de lecture de niveau (200) selon l'une quelconque des revendications précédentes, dans lequel la pluralité de capteurs (64) sont répartis sur une longueur de 10 à 35 cm, préférablement sur une longueur de 15 à 30 cm, et le plus préférablement sur une longueur de 20 à 25 cm.

10. Système de lecture de niveau (200) selon l'une quelconque des revendications précédentes, dans lequel la pluralité de capteurs (64) sont des capteurs magnéto-résistifs.

11. Système de lecture de niveau (200) selon la revendication 10, dans lequel la sensibilité magnéto-résistive des capteurs est dans la plage de 5 à 15 G, préférablement dans la plage de 7 G à 11 G.

12. Système de lecteur de niveau (200) selon la revendication 10, dans lequel la sensibilité magnéto-résistive des capteurs est dans la plage de 10 à 25 G, préférablement dans la plage de 14 G à 20 G.

13. Système de lecture de niveau (200) selon l'une quelconque des revendications précédentes, dans lequel l'extension longitudinale du logement (62) est substantiellement plus grande qu'une extension verticale du dispositif de maintien en forme d'anneau (74).

14. Machine de production d'emballage (10) comprenant le système de lecture de niveau (200) selon l'une quelconque des revendications précédentes.
